# EUROPÄISCHE PATENTANMELDUNG

(11) **EP 2 716 201 A1**
(43) Veröffentlichungstag der Anmeldung: **09.04.2014**
(21) Anmeldenummer: 13401109.7
(22) Anmeldetag: 01.10.2013
(51) Int. Cl.: A47L 15/00, A47L 15/42

(54) **Geschirrspülautomat, insbesondere Haushaltsgeschirrspülmaschine**

(30) Priorität: 02.10.2012 DE 102012109365
(71) Anmelder: Miele & Cie. KG, 33332 Gütersloh (DE)
(72) Erfinder: Schütte, Thorsten, 33102 Paderborn (DE); Sgurski, Eugen, 33649 Bielefeld (DE)

(57) **Zusammenfassung**

Die Erfindung betrifft einen Geschirrspülautomat, insbesondere Haushaltsgeschirrspülmaschine, mit einem einen Spülraum (4) bereitstellenden Spülbehälter (3), der der Aufnahme von zu reinigendem Spülgut dient, und mit einem Vorratsbehälter (5) für die Zwischenspeicherung von Spülflotte, wobei der Vorratsbehälter (5) an den Spülbehälter (3) strömungstechnisch angeschlossen ist, wobei eine den Verkeimungsgrad der im Vorratsbehälter (5) zwischengespeicherten Spülflotte erfassende Detektionseinheit (8) vorgesehen ist.

## Beschreibung

Die Erfindung betrifft einen Geschirrspülautomaten, insbesondere in der Ausgestaltung als Haushaltsgeschirrspülmaschine, mit einem einen Spülraum bereitstellenden Spülbehälter, der der Aufnahme von zu reinigendem Spülgut dient, und mit einem Vorratsbehälter für die Zwischenspeicherung von Spülflotte, wobei der Vorratsbehälter an den Spülbehälter strömungstechnisch angeschlossen ist. Die Erfindung betrifft ferner ein Verfahren zum Betrieb eines Geschirrspülautomaten, insbesondere einer Haushaltsgeschirrspülmaschine.

Geschirrspülautomaten der gattungsgemäßen Art sind aus dem Stand der Technik an sich gut bekannt, weshalb es eines gesonderten druckschriftlichen Nachweises an dieser Stelle nicht bedarf. Sie verfügen über einen einen Spülraum bereitstellenden Spülbehälter, der im bestimmungsgemäßen Verwendungsfall der Aufnahme von zu reinigendem Spülgut dient. Zur Beschickung des Spülbehälters mit Spülgut dient eine Beschickungsöffnung, die mittels einer verschwenkbar gelagerten Spülraumtür fluiddicht verschließbar ist.

Für eine Beaufschlagung von zu reinigendem Spülgut mit Spülflotte dienen innerhalb des Spülbehälters angeordnete Sprüheinrichtungen, die vorzugsweise als verdrehbar angeordnete Sprüharme ausgebildet sind. Diese werden im bestimmungsgemäßen Verwendungsfall über eine Umwälzpumpe mit Spülflotte versorgt. Dabei können je nach Ausgestaltung des Geschirrspülautomaten zwei oder drei solcher Sprüharme vorgesehen sein.

Der Geschirrspülautomat ist zum Zwecke der Wassereinsparung des Weiteren mit einem Vorratsbehälter zur Zwischenspeicherung von Spülflotte ausgerüstet. Dieser Vorratsbehälter dient dazu, am Ende eines bestimmungsgemäßen Programmablaufes im Spülbehälter noch befindliche Restspülflotte aufzunehmen und bis zum Beginn eines nächsten Spülprogramms zu bevorraten. Typischerweise wird die zum Ende eines Spülprogramms verhältnismäßig saubere Klarspülflotte zur Zwischenspeicherung genutzt. Mit Beginn eines neuen Spülprogramms wird die zwischengespeicherte Spülflotte in den Spülbehälter abgelassen, so dass eine um die Menge an zurückgeführter Spülflotte reduzierte Menge an Frischwasser für den Beginn des neuen Spülprogramms erforderlich ist. Es lässt sich insoweit eine Einsparung an Frischwasser erreichen.

Die innerhalb des Vorratsbehälters zwischengespeicherte Spülflotte unterliegt der Verkeimung. Dabei nimmt der Verkeimungsgrad mit zunehmender Dauer der Verweilung der Spülflotte im Vorratsbehälter zu. Zur Vermeidung eines kritischen Verkeimungsgrades und einer unter Umständen damit einhergehenden Geruchsbelästigung, könnte nach Ablauf einer vorbestimmten Verweildauer der Spülflotte im Vorratsbehälter eine automatische Zwangsentleerung des Vorratsbehälters vorgenommen werden, d.h. die im Vorratsbehälter zwischengespeicherte Spülflotte ohne weitere Nutzung verworfen werden.

Allerdings hat sich herausgestellt, dass es infolge einer Verkeimung der Spülflotte auch zu einer Verkeimung der Innenoberfläche des Vorratsbehälters kommt, wobei sich ein sogenannter Bio-Film an der Innenoberfläche des Vorratsbehälters absetzt. Nach einer bestimmungsgemäßen Entleerung und Wiederauffüllung des Vorratsbehälters mit Spülflotte wirkt ein an der Innenoberfläche des Vorratsbehälters unter Umständen befindlicher Bio-Film als Keimherd für eine neu in den Vorratsbehälter eingeleitete Spülflotte. In der Konsequenz kommt es zu einem Keimübertrag auf die Spülflotte, wodurch diese kontaminiert wird. In der Folge kommt es zu einer rasch beginnenden und dann schnell anwachsenden Verkeimung. Dies kann in nachteiliger Weise dazu führen, dass die Spülflotte einen kritischen Verkeimungsgrad erreicht, bevor es nach Ablauf einer vorgebbaren Zeitdauer zu einer Zwangsentleerung des Vorratsbehälters kommt. Die rasch einsetzende Verkeimung der Spülflotte führt im Übrigen auch dazu, dass der an der Behälterinnenwand befindliche Bio-Film weiter anwächst, so dass es im Laufe der Zeit zu immer größer werdenden Keimeintragungen in eine neu in den Vorratsbehälter eingeleitete Spülflotte kommt, so dass sich die Zeitdauer, innerhalb welcher es zu einer kritischen Verkeimung der neu in den Vorratsbehälter eingeleiteten Spülflotte kommt, im Laufe der Zeit immer weiter verringert. Eine Zwangsentleerung, die nach Ablauf einer vorgebbaren Verweildauer einsetzt, vermag insofern ohne weitere Maßnahmen das Problem der Wiederverkeimung nicht zu beheben.

Es ist deshalb die **Aufgabe** der Erfindung, einen Geschirrspülautomaten vorzuschlagen, der eine Wiederverkeimung von Spülflotte zu vermeiden hilft. Es soll ferner ein entsprechendes Verfahren zu Betrieb eines Geschirrspülautomaten vorgeschlagen werden.

Vorrichtungsseitig wird zur Lösung der vorstehenden Aufgabe vorgeschlagen ein Geschirrspülautomat der eingangs genannten Art, der sich auszeichnet durch eine den Verkeimungsgrad der im Vorratsbehälter zwischengespeicherten Spülflotte erfassende Detektionseinheit.

Der Geschirrspülautomat nach der Erfindung zeichnet sich durch eine Detektionseinheit aus. Diese dient dazu, den Verkeimungsgrad einer im Vorratsbehälter befindlichen Spülflotte zu erfassen. In Abhängigkeit des festgestellten Verkeimungsgrades kann dann entschieden werden, ob die Spülflotte noch weiter im Vorratsbehälter bevorratet bleibt oder beispielsweise durch Abpumpen verworfen wird.

Im Unterschied zum Stand der Technik erfolgt also ein Verwerfen der Spülflotte nicht nach Ablauf einer statischen, unveränderten Zeitspanne, sondern es ist vielmehr vorgesehen, ein Verwerfen der Spülflotte in Abhängigkeit des sich einstellenden Verkeimungsgrades vorzunehmen. In der Konsequenz ist so sichergestellt, dass eine Wiederverkeimung neu in den Vorratsbehälter eingeführter Spülflotte minimiert, wenn nicht sogar ganz verhindert werden kann.

Als "Verkeimungsgrad" im Sinne der Erfindung gilt dabei die Anzahl von Keimen je ml Spülflotte. Mittels der erfindungsgemäß vorgesehenen Detektionseinheit wird also erfasst, wie hoch die Keimanzahl ist, und zwar volumenbezogen je ml Spülflotte. Bei einem Wert von 10⁶ Keimen/ml Spülflotte ist die Spülflotte in jedem Fall zu verwerfen. Der Verkeimungsgrad ist bei einer solchen Keimanzahl derart hoch, dass bereits eine Geruchsbelästigung vorliegen kann. Es ist indes bevorzugt, bei einer maximalen Verkeimung, d.h. bei einem Verkeimungsgrad von 10⁵ Keimen/ml Spülflotte ein Verwerfen der Spülflotte vorzusehen. Noch mehr bevorzugt wird die Spülflotte bei Erreichen eines Verkeimungsgrades von 10⁴ Keimen je ml Spülflüssigkeit verworfen.

Unterhalb einer Keimzahl von 10⁴ Keimen je ml Spülflotte ist die Keimzahl so hinreichend gering, dass eine Wiederverwendung der Spülflotte ohne Weiteres möglich ist. Eine Wiederverkeimung und/oder eine Geruchsbelästigung finden bei einer solchen geringen Keimanzahl je ml Spülflotte dem Grunde nach nicht statt.

Gemäß einem besonderen Vorteil der Erfindung ist vorgesehen, dass die Detektionseinheit einen Sensor aufweist. Es wird mittels dieses Sensors die Keimanzahl in der Spülflotte messtechnisch erfasst. Dabei kann als Sensor ein physikalischer und/oder ein chemischer Sensor zum Einsatz kommen, beispielsweise ein optischer Sensor oder dergleichen. Es können auch eine Mehrzahl von Sensoren vorgesehen sein, die der jeweiligen Ermittlung unterschiedlicher Parameter dienen.

Gemäß einem weiteren Merkmal der Erfindung ist vorgesehen, dass die Detektionseinheit eine statistische Auswerteeinheit aufweist. In diesem Fall erfolgt die Erfassung der Keimanzahl nicht messtechnisch, sondern sie wird mittels der Auswerteeinheit berechnet. Dabei dienen zur Berechnung Ausgangsgrößen, die zu Beginn monteurseitig einmalig festzulegen sind, und auf die dann im Weiteren bei einer jeden Berechnung durch die Auswerteeinheit zurückgegriffen wird. Derartige Auswertegrößen können beispielsweise die am Aufstellungsort des Geschirrspülautomaten gegebene Wasserzusammensetzung oder der pH-Wert des typischerweise eingesetzten Frischwassers sein.

Ein verbessertes Kalkulationsergebnis wird gemäß einem weiteren Merkmal der Erfindung erreicht, wenn zur Bestimmung der Keimanzahl durch eine statistische Auswerteeinheit nicht nur Ausgangsgrößen zur Berechnungsgrundlage gemacht werden, sondern zusätzlich weitere Betriebsparameter, wie zum Beispiel die anfängliche Temperatur des in den Vorratsbehälters eingespeiste Spülflotte. Dabei ergibt sich die Temperatur aus dem zuletzt durchgeführten Spülprogramm, nach dessen Abschluss ein Teil der Spülflotte in den Vorratsbehälter abgepumpt worden ist. Diese Temperatur ist automatenseitig programmgesteuert vorgegeben, mithin bekannt und kann der Auswerteeinheit zur Berechnung der Keimanzahl zur Verfügung gestellt werden.

Gemäß einer bevorzugten Ausführungsform verfügt die Detektionseinheit sowohl über einen Sensor als auch über eine Auswerteeinheit. In diesem Fall erfolgt eine statistische Auswertung auf Basis von sensorisch erfassten Ausgangsparametern, wobei auch eine periodische Neuerfassung dieser Ausgangsparameter und damit eine periodische Neubestimmung der Keimanzahl vorgenommen werden kann.

Der kombinierte Einsatz eines Sensors und einer statistischen Auswerteinheit ist bevorzugt, da hierdurch eine hinreichend genaue Bestimmung der Keimanzahl stattfinden kann, und dies bei gleichzeitig verhältnismäßig geringem messtechnischem Aufwand. So lassen sich beispielsweise Ausgangsparameter wie Druck, Temperatur, Wasserzusammensetzung, pH-Wert und/oder dgl. vergleichsweise einfach ermitteln, auch in periodischen Abständen. Derlei Ausgangsparameter ermöglichen eine hinreichend genaue statistische Auswertung, wobei die Auswertergebnisse selbst wiederum gespeichert und statistisch ausgewertet werden können, womit eine auf die Dauer immer genauer werdende Keimzahlbestimmung erreicht ist.

Gemäß einem weiteren Merkmal der Erfindung ist eine Vergleichseinheit vorgesehen, die einen mittels der Detektionseinheit erfassten Ist-Verkeimungsgrad mit einem vorgebbare Maximal-Wert vergleicht.

Die Vergleichseinheit dient dazu, den erfassten Ist-Wert der Keimanzahl, d.h. des Verkeimungsgrades mit einem zuvor vorgegebenen Maximal-Wert zu vergleichen. Der Maximal-Wert kann herstellerseitig vorgegeben sein und beispielsweise 10⁶ Keime/ml Spülflotte, vorzugsweise 10⁵ Keime/ml Spülflotte, noch mehr bevorzugt 10⁴ Keime/ml Spülflotte betragen.

Gemäß einem weiteren Merkmal der Erfindung ist eine Steuereinheit vorgesehen, die eine Zwangsentleerung des Vorratsbehälters auslöst, wenn der erfasste Ist-Verkeimungsgrad gleich dem vorgegebenen Maximal-Wert ist oder diesen übersteigt.

Die Steuereinheit ist zu diesem Zweck beispielsweise an eine Förderpumpe angeschlossen. Sobald die Steuereinheit auslöst, erfolgt ein Abpumpen der im Vorratsbehälter zwischengespeicherten Spülflotte, wobei die Spülflotte entsorgt, d.h. verworfen wird. Der Vorratsbehälter bleibt dann entleert, bis in einem nachfolgenden Spülprogramm dem Spülbehälter Spülflotte zum Zwecke der Zwischenspeicherung im Vorratsbehälter entnommen wird.

Verfahrensseitig wird zur **Lösung** der vorstehenden Aufgabe vorgeschlagen ein Verfahren zum Betrieb eines Geschirrspülautomatens, insbesondere einer Haushaltsgeschirrspülmaschine, mit einem einen Spülraum bereitstellenden Spülbehälter, der der Aufnahme von zu reinigendem Spülgut dient, und mit einem Vorratsbehälter für die Zwischenspeicherung von Spülflotte, wobei der Vorratsbehälter an den Spülbehälter strömungstechnisch angeschlossen ist, bei dem mit Erreichen eines vorgebbaren Verkeimungsgrades der im Vorratsbehälter zwischengespeicherten Spülflotte eine Zwangsentleerung des Vorratsbehälters durchgeführt wird.

Verfahrenstechnisch ist demnach vorgesehen, dass es zu einer Zwangsentleerung des Vorratsbehälters kommt, sobald ein im Vorfeld vorgegebener Verkeimungsgrad hinsichtlich der von dem Vorratsbehälter aufgenommenen Spülflotte erreicht wird.

Gemäß einer besonderen Ausführungsform ist dabei vorgesehen, dass der Ist-Verkeimungsgrad der im Vorratsbehälter zwischengespeicherten Spülflotte mittels einer Detektionseinheit erfasst und anschließend mittels einer Vergleichsschaltung mit einem vorgebbaren Maximal-Wert verglichen wird, wobei eine Zwangsentleerung des Vorratsbehälters durchgeführt wird, wenn der erfasste Ist-Verkeimungsgrad gleich dem vorgegebenen Maximal-Wert ist oder diesen übersteigt.

Dabei kann die Erfassung des Ist-Verkeimungsgrades messtechnisch mittels eines Sensors und/oder statistisch mittels einer Auswerteeinheit durchgeführt werden. Dabei ist es indes bevorzugt, einen Sensor einerseits sowie eine Auswerteeinheit andererseits vorzusehen, so dass dann eine Erfassung des Ist-Verkeimungsgrades auf Basis eines kombinierten Einsatzes eines Sensors und einer Auswerteeinheit erfolgen kann.

Weitere Merkmale und Vorteile der Erfindung ergeben sich aus der nachfolgenden Beschreibung anhand der Figuren. Dabei zeigen:
- Fig. 1: in einer schematischen Darstellung einen Geschirrspülautomaten nach der Erfindung;
- Fig. 2: in schematischer Darstellung ein erfindungsgemäßer Verfahrensablauf und
- Fig. 3: in einer Diagramm-Darstellung eine typische Keimwachstumskurve

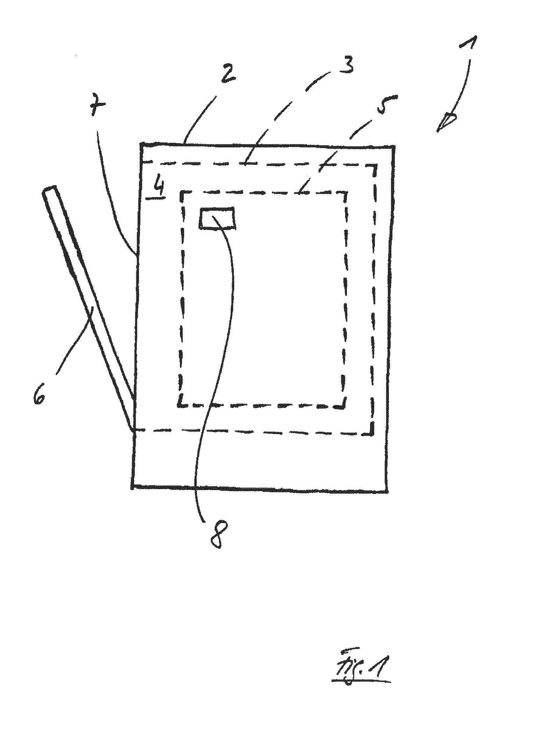

Fig. 1 lässt in schematischer Darstellung einen Geschirrspülautomaten 1 in Form einer Haushaltsgeschirrspülmaschine erkennen. Der Geschirrspülautomat 1 verfügt über ein Gehäuse 2, das einen einen Spülraum 4 bereitstellenden Spülbehälter 3 aufnimmt. Der Spülbehälter 3 dient im bestimmungsgemäßen Verwendungsfall der Aufnahme von zu reinigendem Spülgut.

Der vom Spülbehälter 3 bereitgestellte Spülraum 4 ist über eine Beschickungsöffnung 7 zugänglich. Diese ist mittels einer verschwenkbar am Gehäuse 2 angeordneten Spülraumtür 6 fluiddicht verschließbar.

Zur Beaufschlagung von zu reinigendem Spülgut mit Spülflotte sind innerhalb des Spülbehälters 3 vorzugsweise drehbar gelagerte Sprüharme angeordnet, die der besseren Übersicht wegen in der schematischen Darstellung nach Fig. 1 nicht dargestellt sind.

Der Geschirrspülautomat 1 verfügt des Weiteren über einen Vorratsbehälter 5 für die Zwischenspeicherung von Spülflotte. Dieser Vorratsbehälter 5 kann innerhalb des Gehäuses 2 oder auch außerhalb desselben ausgebildet sein. Im gezeigten Ausführungsbeispiel ist der Vorratsbehälter 5 im nicht näher dargestellten Spaltraum zwischen Spülbehälter 3 einerseits und Gehäuse 2 andererseits untergebracht.

Der Vorratsbehälter 5 ist strömungstechnisch mit dem Spülbehälter 3 gekoppelt. Über diese strömungstechnische Verbindung kann dem Spülbehälter 3 Spülflotte entnommen und dem Vorratsbehälter 5 zugeführt bzw. in umgekehrter Richtung aus dem Vorratsbehälter 5 in den Spülbehälter 3 überführt werden.

Der Vorratsbehälter 5 dient der Zwischenspeicherung von Spülflotte. Typischerweise wird dem Spülbehälter 3 zum Ende eines bestimmungsgemäß durchgelaufenen Spülprogramms Spülflotte entnommen und im Vorratsbehälter 5 bis zum Beginn eines nächsten Spülprogramms zwischengespeichert. Damit erlaubt der Vorratsbehälter 5 die Zwischenspeicherung von Spülflotte, womit die insgesamt für einen bestimmungsgemäßen Programmablauf benötigte Menge an Frischwasser reduziert werden kann, da mit Beginn eines neuen Spülprogramms aus einem vorangegangenen Spülprogramm stammende Spülflotte genutzt werden kann. Es findet insofern eine Wiederverwendung von Spülflotte statt.

Typische Vorratsbehälter 5 haben ein Speichervolumen von 2l, 3l oder 4l.

Die im Vorratsbehälter 5 zwischengespeicherte Spülflotte verkeimt im Laufe der Zeit und es können sich Ablagerungen, Verkeimungen und dgl. Bio-Filme im Inneren des Vorratsbehälters 5, d.h. auf der Innenoberfläche des Vorratsbehälters 5 ausbilden. Hierdurch können unangenehme Gerüche entstehen. Es besteht zudem die Gefahr, dass sich etwaige Ablagerungen, Verkeimungen und dgl. Bio-Filme ablösen, was dann zu einer Funktionsbeeinträchtigung oder sogar zu einem Komplettausfall des Vorratsbehälters 5 oder sogar des gesamten Geschirrspülautomaten 1 führen kann. Darüber hinaus besteht das Problem der sogenannten Wiederverkeimung. So führt im Vorratsbehälters 5 zurückbleibender Bio-Film dazu, dass neu in den Vorratsbehälter 5 eingeführte Spülflotte schneller verkeimt, da der zurückbleibende Bio-Film für die neueingeführte Spülflotte Keimherde darstellt, wodurch ein schnelles Keimwachstum innerhalb der neueingeführten Spülflotte ermöglicht ist.

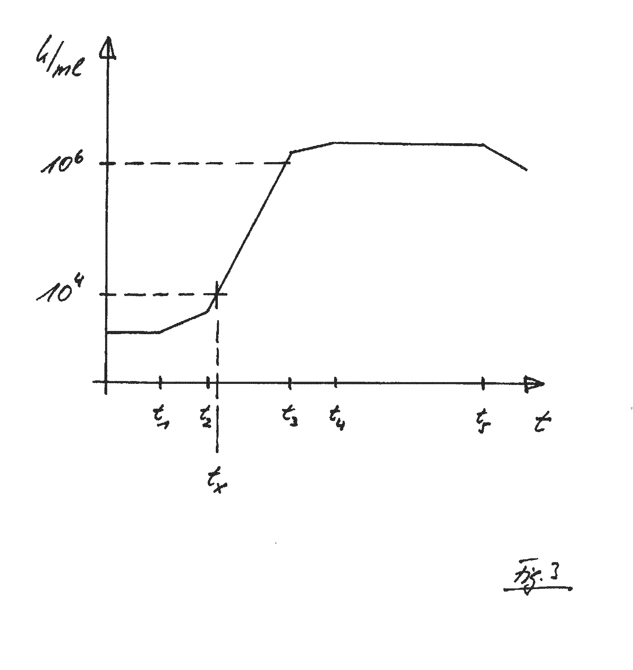

Der Verlauf eines typischen Keimwachstums zeigt das Diagramm nach Fig. 3. Hier ist über die Zeit t die Keimanzahl je ml Spülflotte abgetragen. Wie der Diagrammverlauf erkennen lässt, umfasst ein typisches Keimwachstum sechs aufeinander nachfolgende Phasen, und zwar wie folgt:
1 Phase: 0-t₁, die sogenannte Lag-Phase
2 Phase: t₁ - t₂, die sogenannte Anlauf-Phase
3 Phase: t₂ - t₃, die sogenannte Log-Phase (oder expotentielle Phase)
4 Phase: t₃ - t₄, die sogenannte Verzögerungs-Phase
5 Phase: t₄ - t₅, die sogenannte stationäre Phase
6 Phase: ab t₅, die sogenannte Absterbe-Phase

Zur Erläuterung der einzelnen Phasen:
1. Phase: In der Lag-Phase erfolgt die Umstellung auf die neuen Lebensbedingungen, wie zum Beispiel eine andere Temperatur.
2. Phase: In der Anlauf-Phase erfolgen die ersten Zellteilungen und ein erstes Keimwachstum beginnt, wobei sich die Zellen noch nicht in regelmäßigen Zeitabständen teilen.
3. Phase: Es erfolgt nun expotentielles Keimwachstum, bei dem die Zellen die angebotenen Nährstoffe und gegebenen physikalischen Bedingungen optimal ausnutzen.
4. Phase: Die Keimumgebung oder ein anderer Faktor limitieren das Wachstum allmählich. Es teilen sich nicht mehr alle Zellen regelmäßig und es kommt zu einem verringerten Keimwachstum.
5. Phase: In der stationären Phase kommt es nahezu zur Einstellung der Zellteilungen Ein oder mehrerer Faktoren verhindern weiteres Keimwachstum, zum Beispiel O₂-Knappheit, Nährstoffverbrauch, Anhäufung eines hemmenden Stoffwechselprodukts, veränderter pH-Wert.
6. Phase: Keime sterben aufgrund von z.B. O₂-Mangel ab. Es erfolgen keine weiteren Teilungen. Die Keimanzahl nimmt ab, da tote Zellen wenig Licht absorbieren. Fehlende Energie durch Verbrauch der Energiequelle oder Anwesenheit eines toxischen Stoffwechselprodukts stellen sich ein.

Die Anzahl der Keime je ml Spülflotte stellt den Verkeimungsgrad dar. Dabei sind unter "Keimen" im Sinne der Erfindung Krankheitserreger im Allgemeinen zu verstehen, wie z.B. Bakterien, Protisten, Pilze, Parasiten, Viruide, Viren, Algen oder Präonen.

Mit Erreichen eines vorgebbaren Verkeimungsgrades soll ein bestimmungsgemäßer Gebrauch der Spülflotte nicht mehr stattfinden. Es ist deshalb erfindungsgemäß vorgesehen, den Verkeimungsgrad einer im Vorratsbehälter 5 zwischengespeicherten Spülflotte zu erfassen und im Falle eines zu hohen Verkeimungsgrades zu verwerfen, d.h. ungenutzt für weitere Spülvorgänge aus dem Vorratsbehälter 5 abzulassen.

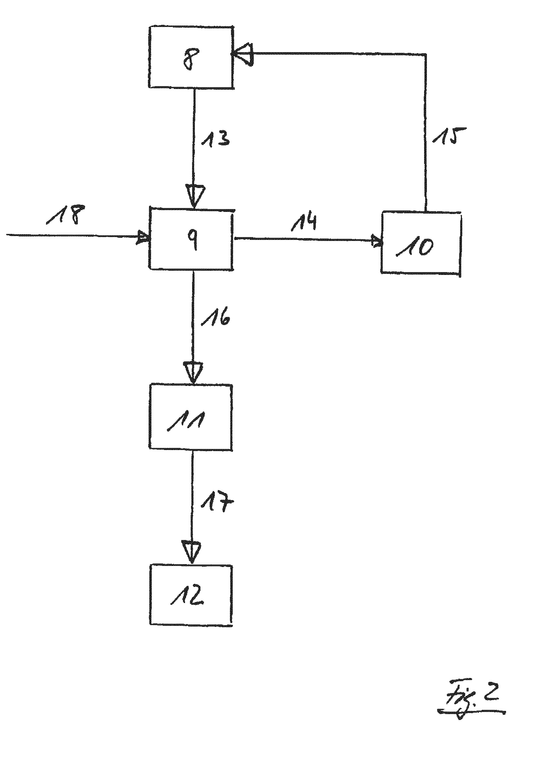

Die hierfür erfindungsgemäß vorgesehene Verfahrensweise ergibt sich aus der Darstellung nach Fig. 2.

Der erfindungsgemäße Geschirrspülautomat 1 verfügt über einen den Verkeimungsgrad der im Vorratsbehälter 5 zwischengespeicherten Spülflotte erfassende Detektionseinheit 8. Der mittels dieser Detektionseinheit 8 erfasste Ist-Verkeimungsgrad wird in Entsprechung des Pfeils 13 einer Vergleichseinheit 9 mitgeteilt. Dieser Vergleichseinheit 9 ist herstellerseitig und/oder verwenderseitig ein Maximal-Wert für den Verkeimungsgrad vorgegeben, was in Fig. 2 durch den Pfeil 18 symbolisiert ist. Dieser Maximal-Wert kann bei beispielsweise 10⁴ Keime je ml Spülflotte liegen.

In der Vergleichseinheit 9 wird der von der Detektionseinheit 8 ermittelte Ist-Verkeimungsgrad mit dem vorgegebenen Maximal-Wert verglichen. Befindet sich der Ist-Verkeimungsgrad unterhalb des vorgegebenen Maximal-Werts, so wird in Entsprechung des Pfeils 14 an einen Taktgeber 10 ein entsprechendes Signal abgeben. Der Taktgeber 10 gibt wiederum seinerseits nach Ablauf einer vorgegebenen Zeitspanne, beispielsweise fünf Stunden in Entsprechung des Pfeils 15 ein Signal an die Detektionseinheit 8, woraufhin eine erneute Erfassung des Verkeimungsgrades mit anschließendem Vergleich durchgeführt wird.

Erbringt der durch die Vergleichseinheit 9 vorgenommene Vergleich zwischen erfasster Ist-Verkeimung einerseits und vorgebbaren Maximal-Wert anderseits, dass der Ist-Verkeimungsgrad dem Maximal-Wert entspricht oder diesen sogar übersteigt, so wird in Entsprechung des Pfeils 16 ein Signal an eine Steuereinheit 11 abgeben. Die Steuereinheit 11 gibt wiederum in Entsprechung des Pfeils 17 ein entsprechendes Steuersignal an eine Pumpe 12, die im Weiteren ein Abpumpen der zu stark verkeimten Spülflotte aus dem Vorratsbehälter 5 vornimmt.

Der vorgebbare Maximal-Wert für den Verkeimungsgrad von 10⁴ Keimen je ml Spülflotte ist beispielhaft in Fig. 3 in das dort dargestellte Diagramm eingezeichnet. Dieser Verkeimungsgrad stellt sich nach Ablauf einer Zeit tₓ seit Befüllung des Vorratsbehälters 5 mit Spülflotte ein. 0 bis tₓ kann beispielsweise 30 Stunden, 35 Stunden oder 40 Stunden betragen, je nach Vorverkeimung und/oder den herrschenden Randbedingungen.

Wie die beispielhafte Diagrammdarstellung nach Fig. 3 erkennen lässt, ist der Maximal-Wert des Verkeimungsgrades mit Beginn der dritten Phase, d.h. der eigentlichen Wachstumsphase erreicht. Erfolgt zum Zeitpunkt tₓ kein Abpumpen der Spülflotte aus dem Vorratsbehälter 5, erfolgt im Weiteren ein expotentielles Keimwachstum, womit recht zeitnah der kritische Verkeimungsgrad von z.B. 10⁶ Keimen je ml Spülflotte erreicht ist.

Wie die Darstellung nach Fig. 3 des Weiteren erkennen lässt, ist die Zeitspanne zwischen Einfüllen der Spülflotte in den Vorratsbehälter 5 und Erreichen der Zeit tₓ von Bevorratungszyklus zu Bevorratungszyklus unterschiedlich. Dies ergibt sich zum einen aufgrund von unterschiedlichen Randbedingungen, wie z. B. Temperatur, Druck, pH-Wert und dgl. sowie zum anderen aufgrund einer zu Beginn einer Bevorratung unterschiedlichen Ausgangsgröße hinsichtlich der bereits in der Spülflotte befindlichen Keimzahl. So ist es beispielsweise denkbar, dass die in den Vorratsbehälter 5 eingeleitete Spülflotte bereits mit einer Keimzahl von 10⁴ Keimen je ml Spülflotte belastet ist. In diesem Fall würde ein sofortiges Abpumpen der Spülflotte stattfinden, um eine weitergehende Verkeimung nicht nur der Spülflotte, sondern auch der Innenseite des Vorratsbehälters 5 zu vermeiden. Ein anderes Extrem kann sich dann ergeben, wenn die anfängliche Keimzahl niedrig ist und sich auch ein verhältnismäßig langsames Wachstum einstellt. In diesem Fall kann die Bevorratungszeit 40 Stunden oder sogar 45 Stunden oder 50 Stunden übersteigen.

Mit der Erfindung wird also nicht ein unveränderliches Zeitfenster vorgegeben, wobei nach Ablauf dieser vorgegebenen Zeitspanne ein Verwerfen der Spülflotte stattfindet, es wird erfindungsgemäß vielmehr als Entscheidungskriterium über die Verwerfung der Spülflotte der Verkeimungsgrad verwendet.

### Bezugszeichen

- 1: Geschirrspülautomat
- 2: Gehäuse
- 3: Spülbehälter
- 4: Spülraum
- 5: Vorratsbehälter
- 6: Spülraumtür
- 7: Beschickungsöffnung
- 8: Detektionseinheit
- 9: Vergleichseinheit
- 10: Taktgeber
- 11: Steuereinheit
- 12: Pumpe
- 13: Pfeil
- 14: Pfeil
- 15: Pfeil
- 16: Pfeil
- 17: Pfeil
- 18: Pfeil

## Patentansprüche

1. Geschirrspülautomat, insbesondere Haushaltsgeschirrspülmaschine, mit einem einen Spülraum (4) bereitstellenden Spülbehälter (3), der der Aufnahme von zu reinigendem Spülgut dient, und mit einem Vorratsbehälter (5) für die Zwischenspeicherung von Spülflotte, wobei der Vorratsbehälter (5) an den Spülbehälter (3) strömungstechnisch angeschlossen ist,
**gekennzeichnet durch**
eine den Verkeimungsgrad der im Vorratsbehälter (5) zwischengespeicherten Spülflotte erfassende Detektionseinheit (8).

2. Geschirrspülautomat nach Anspruch 1,
**dadurch gekennzeichnet,**
**dass** die Detektionseinheit (8) einen Sensor aufweist.

3. Geschirrspülautomat nach Anspruch 2,
**dadurch gekennzeichnet,**
**dass** der Sensor ein physikalischer und/oder chemischer Sensor ist.

4. Geschirrspülautomat nach einem der vorhergehenden Ansprüche,
**dadurch gekennzeichnet,**
**dass** die Detektionseinheit (8) eine statistische Auswerteeinheit aufweist.

5. Geschirrspülautomat nach einem der vorhergehenden Ansprüche,
**gekennzeichnet durch**
eine Vergleichseinheit (9), die einen mittels der Detektionseinheit (8) erfassten Ist-Verkeimungsgrad mit einem vorgebbaren Maximal-Wert vergleicht.

6. Geschirrspülautomat nach einem der vorhergehenden Ansprüche,
**gekennzeichnet durch**
eine Steuereinheit (11), die eine Zwangsentleerung des Vorratsbehälters (5) auslöst, wenn der erfasste Ist-Verkeimungsgrad gleich dem vorgebbaren Maximal-Wert ist oder diesen übersteigt.

7. Geschirrspülautomat nach Anspruch 5 oder 6,
**dadurch gekennzeichnet,**
**dass** der Maximal-Wert für den Verkeimungsgrad 10⁴ Keime/ml Spülflotte beträgt.

8. Verfahren zum Betrieb eines Geschirrspülautomaten (1), insbesondere einer Haushaltsgeschirrspülmaschine, mit einem einen Spülraum (4) bereitstellenden Spülbehälter (3), der der Aufnahme von zu reinigendem Spülgut dient, und mit einem Vorratsbehälter (5) für die Zwischenspeicherung von Spülflotte, wobei der Vorratsbehälter (5) an den Spülbehälter (3) strömungstechnisch angeschlossen ist, bei dem mit Erreichen eines vorgebbaren Verkeimungsgrades der im Vorratsbehälter (5) zwischengespeicherten Spülflotte eine Zwangsentleerung des Vorratsbehälters (5) durchgeführt wird.

9. Verfahren nach Anspruch 8,
**dadurch gekennzeichnet,**
**dass** der Ist-Verkeimungsgrad der im Vorratsbehälter (5) zwischengespeicherten Spülflotte mittels einer Detektionseinheit (8) erfasst und anschließend mittels einer Vergleichsschaltung mit einem vorgebbaren Maximal-Wert verglichen wird, wobei eine Zwangsentleerung des Vorratsbehälters (5) durchgeführt wird, wenn der erfasste Ist-Verkeimungsgrad gleich dem vorgebbaren Maximal-Wert ist oder diesen übersteigt.

10. Verfahren nach Anspruch 9,
**dadurch gekennzeichnet,**
**dass** die Erfassung des Ist-Verkeimungsgrades messtechnisch mittels eines Sensors durchgeführt wird.

11. Verfahren nach Anspruch 9 oder 10,
**dadurch gekennzeichnet,**
**dass** die Erfassung des Ist-Verkeimungsgrades statistisch mittels einer Auswerteeinheit durchgeführt wird.

12. Verfahren nach einem der vorhergehenden Ansprüche 8 bis 11,
**dadurch gekennzeichnet,**
**dass** der Maximal-Wert für den Verkeimungsgrad mit 10⁴ Keime/ml Spülflotte gewählt wird.
